# EUROPEAN PATENT SPECIFICATION

(11) **EP 3 184 702 B1**
(45) Date of publication and mention of the grant of the patent: **17.07.2019**
(21) Application number: 16201601.8
(22) Date of filing: 01.12.2016
(51) Int. Cl.: E03C 1/04

(54) **CONNECTION STRUCTURE FOR PLASTIC WATER CHANNEL MAIN BODY OF TEMPERATURE REGULATING FAUCET AND METHOD OF IMPLEMENTING THE SAME**
VERBINDUNGSVORRICHTUNG FÜR EINEN KUNSTSTOFFWASSERKANALHAUPTKÖRPER EINER TEMPERATURGEREGELTEN ARMATUR UND VERFAHREN ZUR UMSETZUNG DAVON
STRUCTURE DE CONNEXION DU CORPS PRINCIPAL DE CANAL D'EAU EN PLASTIQUE D'UN ROBINET DE RÉGULATION DE TEMPÉRATURE ET SON PROCÉDÉ DE MISE EN OEUVRE

(30) Priority: 04.12.2015 CN 201510880321
(43) Date of publication of application: 28.06.2017
(73) Proprietor: Xiamen Runner Industrial Corporation, Xiamen 361021 (CN)
(72) Inventor: CHEN, Xi-Min, Xiamen, Fujian 361021 (CN); LIN, Feng, Xiamen, Fujian 361021 (CN); LIN, Xian-Hai, Xiamen, Fujian 361021 (CN)
(74) Representative: Cabinet Chaillot

(56) References cited:
- CN-A- 104 197 040
- CN-U- 201 475 461
- US-A1- 2015 354 183

## Description

### BACKGROUND OF THE INVENTION

### Field of the Invention

The present invention relates to a connection structure and connection method, and in particular to a connection structure for a plastic water channel main body of a temperature regulating faucet, and a connection method for implementing the same.

### The Prior Arts

In the early stage, a water channel main body for a dual input temperature regulating faucet is made of a blank cast from copper. Then, it is formed through complicated machining. Since copper is in short supply, its machining cost is high, while its yield is low, such that the price of the water channel main body thus produced is rather high. For this reason, plastic replaces copper, while injection molding suitable for mass production replaces the complicated machining, to manufacture a plastic water channel main body for a temperature regulating faucet. However, due to the specialty and complicity of the structure involved, usually, in case the ordinary injection molding is utilized, for the lateral tube on the water channel main body, its inner holes can not be formed. Therefore, the plastic water channel main body can not be formed integrally into a body. Instead, it has to be made by sections, and then be put together. Yet, by doing so, the production efficiency is low, while its cost is high. In addition, its overall structure strength and durability can not be ensured. Further, for a manufacturing process, only one type of temperature regulating faucet can be produced, thus its application is limited, and it is not suitable for mass production. Documents CN 104197040 A and US 2015/0354183 both disclose a plastic water channel main body as desribed above, wherein the CN document corresponds to the preamble of claim 1.

Therefore, presently, the design and performance of the temperature regulating faucet is not quite satisfactory, and it leaves much room for improvement.

### SUMMARY OF THE INVENTION

In view of the problems and drawbacks of the prior art, the present invention provides a connection structure for a plastic water channel main body of a temperature regulating faucet, and a connection method for implementing the same, the connection structure being compact and able to provide various forms for the faucet, having wide applications, and being suitable for fast production.

The major objective of the present invention is to provide a connection structure for a plastic water channel main body of a temperature regulating faucet according to the preamble of claim 1, characterized by the fact that the opening extends from one end of the lateral tube to the other end thereof.

In an aspect of the present invention, an outer thread is provided around an outer perimeter of the water output tube, to be thread-connected to the faucet.

In another aspect of the present invention, the connection structure for a plastic water channel main body of a temperature regulating faucet further includes two protrusion blocks, disposed respectively on two sides at two upper ends of the water output tube, to be fastened to the faucet; while a vertical protrusion portion is provided on an outside face of the protrusion block, and an indent portion is provided at a lower portion at an inside face of the protrusion block, to match and receive a connection end of the faucet.

In yet another aspect of the present invention, the water seal plate is welded or glued to the opening of the lateral tube, while an arc-shaped bend portion is formed into a forward bend at a middle part of the lateral tube.

In a further aspect of the present invention, the connection structure for a plastic water channel main body of a temperature regulating faucet further includes: two position restriction indent portions, provided respectively on inner walls at upper ports of the tube-shaped valve seat, used for installing a valve body.

In another aspect of the present invention, the connection structure for a plastic water channel main body of a temperature regulating faucet further includes: a plurality of horizontal reinforcing ribs, disposed and spaced apart from each other around an outer perimeter of each tube-shaped valve seat from top to bottom; and a plurality of longitudinal reinforcing ribs, disposed between the horizontal reinforcing ribs and spaced apart from each other, around the outer perimeter of each tube-shaped valve seat.

The present invention also provides a connection method of a connection structure for a plastic water channel main body of a temperature regulating faucet, having the features of claim 7.

In an aspect of the present invention, in the step 2, the welding tool is a hot-plate welding machine, that is used to heat an end face near the opening of the lateral tube, to melt a surface of the end face; meanwhile, utilizing the hot-plate welding machine to heat the water seal plate, to melt a lower end face of the water seal plate; and finally putting the heated lateral tube and the heated water seal plate together to fix them tightly to finish welding.

In another aspect of the present invention, the heating time is 6-7 seconds, the welding temperature is 380°∼450°, while the fixing tight duration is 6-7 seconds.

In a further aspect of the present invention, in the step 2, the welding tool is a vibration-friction type welding machine, used to realize vibration welding of the lateral tube and the water seal plate; or alternatively, the welding tool is an ultrasonic type welding machine, used to realize ultrasonic welding of the lateral tube and the water seal plate.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the scope of the present invention will become apparent to those skilled in the art from the detail descriptions.

### BRIEF DESCRIPTION OF THE DRAWINGS

The related drawings in connection with the detailed descriptions of the present invention to be made later are described briefly as follows, in which:
Fig. 1 is a schematic diagram of a connection structure for a plastic water channel main body of a temperature regulating faucet according to a first embodiment of the present invention;
Fig. 2 is a schematic diagram of a connection structure for a plastic water channel main body of a temperature regulating faucet according to a second embodiment of the present invention;
Fig. 3 is a schematic diagram of a connection structure for a plastic water channel main body of a temperature regulating faucet according to a third embodiment of the present invention; and
Fig. 4 is an enlarged view of area A in Fig. 3 according to an embodiment of the present invention.

### DETAILED DESCRIPTION OF THE PREFERRED EMBODIMENT

The purpose, construction, features, functions and advantages of the present invention can be appreciated and understood more thoroughly through the following detailed descriptions with reference to the attached drawings.

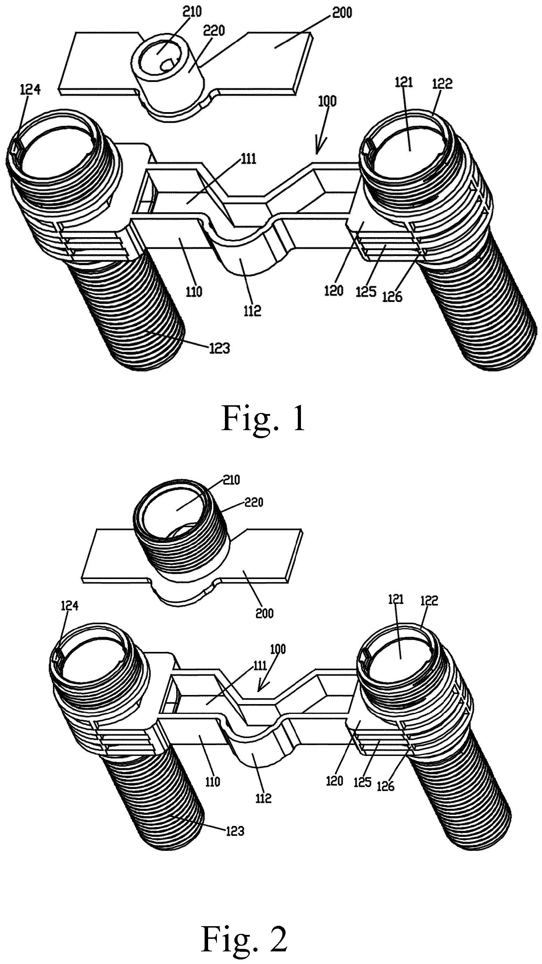

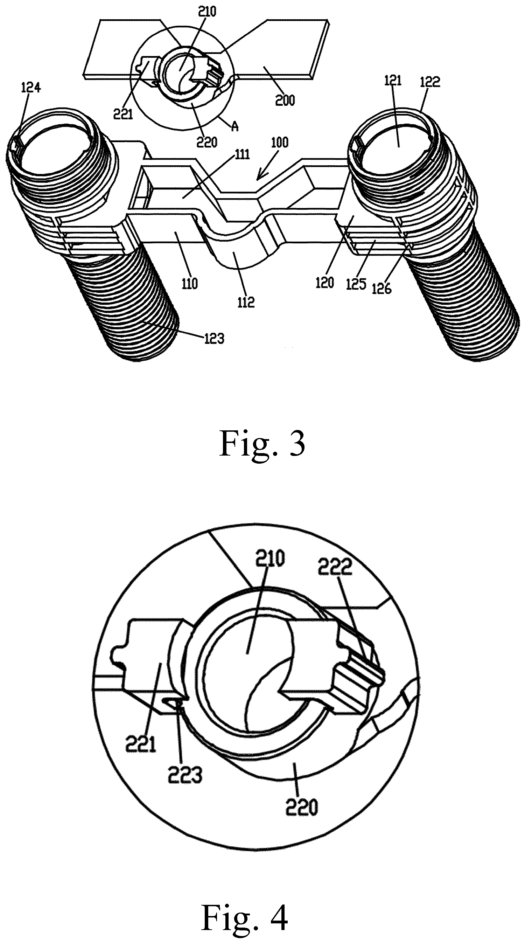

Refer to Figs. 1 to 4 respectively for a schematic diagram of a connection structure for a plastic water channel main body of a temperature regulating faucet according to a first embodiment of the present invention; a schematic diagram of a connection structure for a plastic water channel main body of a temperature regulating faucet according to a second embodiment of the present invention; a schematic diagram of a connection structure for a plastic water channel main body of a temperature regulating faucet according to a third embodiment of the present invention; and an enlarged view of area A in Fig. 3 according to an embodiment of the present invention.

### embodiment 1

Refer to Fig. 1, the present invention provides a connection structure for a plastic water channel main body of a temperature regulating faucet, comprising: an H-shaped skeleton 100 and a water seal plate 200. The H-shaped skeleton 100 is made of plastic, including: a lateral tube 110, having an opening 111 provided thereon; two tube-shaped valve seats 120, connected respectively to both ends of the lateral tube 110, with their inner cavity connected and in communication with the channel of the lateral tube 110, on a flange 122 of each valve seat, at an upper port 121 thereof, there is an outer thread provided, at the lower end of each valve seat, a water input port having a water input tube 123 with an outer thread is provided and extending downwardly from the respective lower end. The water seal plate 200 is made of plastic, used to fix around and seal the opening of the lateral tube 110. The opening is provided on an upper end face of the lateral tube 110 and extending into the tube-shaped valve seat 120. The water seal plate 200 is welded, glued, or inject-molded to fix around the opening of the lateral tube 110 to seal the opening. On the water seal plate 200 there is a water output port 210 provided, in communication with the lateral tube 110, and on the water output port 210 there is a water output tube 220 provided that can be inserted into a faucet.

In the present embodiment, an arc-shaped bend portion 112 is formed into a forward bend at a middle part of the lateral tube 110, to match and receive a pulling rod.

In the present embodiment, two position restriction indent portions 124 are provided respectively on inner walls at upper ports 121 of the tube-shaped valve seat 120, used for installing a valve body, and to prevent the valve body from rotating.

In the present embodiment, a plurality of horizontal reinforcing ribs 125, disposed and spaced apart from each other around an outer perimeter of each tube-shaped valve seat 120 from top to bottom; and a plurality of longitudinal reinforcing ribs 126, disposed between the horizontal reinforcing ribs 125 and spaced apart from each other, around the outer perimeter of each tube-shaped valve seat 120, to increase the strength of the tube-shaped valve seat 120.

The present embodiment also provides a connection method of a connection structure for a plastic water channel main body of a temperature regulating faucet, comprising the following steps:
(1) placing and fixing the H-shaped skeleton 100 on a fixture (step 1);
(2) through using welding tools or adhesive glues, connecting and fixing the water seal plate 200 to the lateral tube 110, thereby sealing the opening of the lateral tube 110 (step 2); and
(3) performing water leakage tests for the fixed and connected H-shaped skeleton 100 and the water seal plate 200 (step 3).

In the present embodiment, in the step 2, the welding tool is a hot-plate welding machine, that is used to heat an end face near the opening of the lateral tube 110, to melt the end face; meanwhile, utilizing the hot-plate welding machine to heat the water seal plate 200, to melt the lower end face of the water seal plate 200; and finally putting the heated lateral tube 110 and the heated water seal plate 200 together to fix them tightly to finish welding.

In the present embodiment, the heating time is 6 seconds, the welding temperature is 380°, while the fixing tight duration is 6 seconds.

In the present embodiment, in the step 2, the welding tool is a vibration-friction type welding machine, used to realize vibration welding of the lateral tube 110 and the water seal plate 200; or alternatively, the welding tool is an ultrasonic type welding machine, used to realize ultrasonic welding of the lateral tube 110 and the water seal plate 200.

### embodiment 2

Refer to Fig. 2, the present invention provides a connection structure for a plastic water channel main body of a temperature regulating faucet, comprising: an H-shaped skeleton 100 and a water seal plate 200. The H-shaped skeleton 100 is made of plastic, including: a lateral tube 110, having an opening 111 provided thereon; two tube-shaped valve seats 120, connected respectively to both ends of the lateral tube 110, with their inner cavity connected and in communication with the channel of the lateral tube 110, on a flange 122 of each valve seat, at an upper port 121 thereof, there is an outer thread provided, at the lower end of each valve seat, a water input port having a water input tube 123 with an outer thread is provided and extending downwardly from the respective lower end. The water seal plate 200 is made of plastic, used to fix around and seal the opening of the lateral tube 110. The opening is provided on an upper end face of the lateral tube 110 and extending into the tube-shaped valve seat 120. The water seal plate 200 is welded, glued, or inject-molded to fix around the opening 111 of the lateral tube 110 to seal the opening. On the water seal plate 200 there is a water output port 210 provided, connected and in communication with the lateral tube 110, and on the water output port 210 there is a water output tube 220 provided that can be connected to a faucet.

In the present embodiment, wherein an outer thread is provided around an outer perimeter of the water output tube 220, to be thread-connected to the faucet.

In the present embodiment, an arc-shaped bend portion 112 is formed into a forward bend at a middle part of the lateral tube 110, to match and receive a pulling rod.

In the present embodiment, two position restriction indent portions 124 are provided respectively on inner walls at upper ports 121 of the tube-shaped valve seat 120, used for installing a valve body, and to prevent the valve body from rotating.

In the present embodiment, a plurality of horizontal reinforcing ribs 125, disposed and spaced apart from each other around an outer perimeter of each tube-shaped valve seat 120 from top to bottom; and a plurality of longitudinal reinforcing ribs 126, disposed between the horizontal reinforcing ribs 125 and spaced apart from each other, around the outer perimeter of each tube-shaped valve seat 120, to increase the strength of the tube-shaped valve seat 120.

The present embodiment also provides a connection method of a connection structure for a plastic water channel main body of a temperature regulating faucet, comprising the following steps:
(1) placing and fixing the H-shaped skeleton 100 on a fixture (step 1);
(2) through using welding tools or adhesive glues, connecting and fixing the water seal plate 200 to the lateral tube 110, thereby sealing the opening of the lateral tube 110 (step 2); and
(3) performing water leakage tests for the fixed and connected H-shaped skeleton 100 and the water seal plate 200 (step 3).

In the present embodiment, in the step 2, the welding tool is a hot-plate welding machine, that is used to heat an end face near the opening of the lateral tube 110, to melt the end face; meanwhile, utilizing the hot-plate welding machine to heat the water seal plate 200, to melt a lower end face of the water seal plate 200; and finally putting the heated lateral tube 110 and the heated water seal plate 200 together to fix them tightly to finish welding.

In the present embodiment, the heating time is 6.5 seconds, the welding temperature is 420°, while the fixing tight duration is 6.5 seconds.

In the present embodiment, in the step 2, the welding tool is a vibration-friction type welding machine, used to realize vibration welding of the lateral tube 110 and the water seal plate 200; or alternatively, the welding tool is an ultrasonic type welding machine, used to realize ultrasonic welding of the lateral tube 110 and the water seal plate 200.

### embodiment 3

Refer to Figs. 3 and 4, the present invention provides a connection structure for a plastic water channel main body of a temperature regulating faucet, comprising: an H-shaped skeleton 100 and a water seal plate 200. The H-shaped skeleton 100 is made of plastic, including: a lateral tube 110, having an opening 111 provided thereon; two tube-shaped valve seats 120, connected respectively to both ends of the lateral tube 110, with their inner cavity connected and in communication with the channel of the lateral tube 110, on a flange 122 of each valve seat, at an upper port 121 thereof, there is an outer thread provided, at the lower end of each valve seat, a water input port having a water input tube 123 with an outer thread is provided and extending downwardly from the respective lower end. The water seal plate 200 is made of plastic, used to fix around and seal the opening of the lateral tube 110. The opening is provided on an upper end face of the lateral tube 110 and extending into the tube-shaped valve seat 120. The water seal plate 200 is welded, glued, or inject-molded to fix around the opening 111 of the lateral tube 110 to seal the opening. On the water seal plate 200 there is a water output port 210 provided, connected and in communication with the lateral tube 110, and on the water output port 210 there is a water output tube 220 provided that can be connected to a faucet, hereby realizing fast fastening of the faucet.

In the present embodiment, two protrusion blocks 221 are disposed respectively on two sides at two upper ends of the water output tube 220, to be fastened to the faucet; while a vertical protrusion portion 222 is provided on an outside face of the protrusion block 221, and an indent portion 223 is provided at a lower portion at an inside face of the protrusion block 221, to match and receive a connection end of the faucet.

In the present embodiment, wherein an outer thread is provided around an outer perimeter of the water output tube 220, to thread-connect to the faucet.

In the present embodiment, an arc-shaped bend portion 112 is formed into a forward bend at a middle part of the lateral tube 110, to match and receive a pulling rod.

In the present embodiment, two position restriction indent portions 124 are provided respectively on inner walls at upper ports 121 of the tube-shaped valve seat 120, used for installing a valve body, and to prevent the valve body from rotating.

In the present embodiment, a plurality of horizontal reinforcing ribs 125, disposed and spaced apart from each other around an outer perimeter of each tube-shaped valve seat 120 from top to bottom; and a plurality of longitudinal reinforcing ribs 126, disposed between the horizontal reinforcing ribs 125 and spaced apart from each other, around the outer perimeter of each tube-shaped valve seat 120, to increase the strength of the tube-shaped valve seat 120.

The present embodiment also provides a connection method of a connection structure for a plastic water channel main body of a temperature regulating faucet, comprising the following steps:
(1) placing and fixing the H-shaped skeleton 100 on a fixture (step 1);
(2) through using welding tools or adhesive glues,connecting and fixing the water seal plate 200 to the lateral tube 110, thereby sealing the opening of the lateral tube 110 (step 2); and
(3) performing water leakage tests for the fixed and connected H-shaped skeleton 100 and the water seal plate 200 (step 3).

In the present embodiment, in the step 2, the welding tool is a hot-plate welding machine, that is used to heat an end face near the opening of the lateral tube 110, to melt the end face; meanwhile, utilizing the hot-plate welding machine to heat the water seal plate 200, to melt the lower end face of the water seal plate 200; and finally putting the heated lateral tube 110 and the heated water seal plate 200 together to fix them tightly to finish welding.

In the present embodiment, the heating time is 7 seconds, the welding temperature is 450°, while the fixing tight duration is 7 seconds.

In the present embodiment, in the step 2, the welding tool is a vibration-friction type welding machine, used to realize vibration welding of the lateral tube 110 and the water seal plate 200; or alternatively, the welding tool is an ultrasonic type welding machine, used to realize ultrasonic welding of the lateral tube 110 and the water seal plate 200.

The above detailed description of the preferred embodiment is intended to describe more clearly the characteristics of the present invention. However, the preferred embodiments disclosed above are not intended to be any restrictions to the scope of the present invention. Various changes and equivalent arrangements are provided in the appended claims.

## Claims

1. A connection structure for a plastic water channel main body of a temperature regulating faucet, comprising:
an H-shaped skeleton (100), made of plastic, including:
a lateral tube (110), having an opening (111) provided on an upper end face thereof;
two tube-shaped valve seats (120), connected respectively to both ends of the lateral tube (110), with the inner cavity of each valve seat (120) connected and in communication with the channel of the lateral tube (110), wherein each valve seat (120) is provided, on its flange (122) at an upper port (121) thereof with an outer thread and at its lower end with a water input port disposed with a water input tube (123) having an outer thread and extending downwardly from the respective lower end; and
a water seal plate (200), made of plastic, to be fixed on and thereby to seal the opening (111) of the lateral tube (110), on the water seal plate (200) there being provided with a water output port (210) in communication with the lateral tube (110), and on the water output port (210) there being provided a water output tube (220), connectable in use to a faucet,
**characterized by** the fact that the opening (111) extends from one end of the lateral tube (110) to the other end thereof.

2. The connection structure according to claim 1, wherein an outer thread is provided around an outer perimeter of the water output tube (220), to be thread-connected to the faucet.

3. The connection structure according to claim 1, further comprising: two protrusion blocks (221), disposed respectively on two sides at two upper ends of the water output tube (220), to be fastened to the faucet; while a vertical protrusion portion (222) is provided on an outside face of the protrusion block (221), and an indent portion (223) is provided at a lower portion at an inside face of the protrusion block (221), to match and receive a connection end of the faucet.

4. The connection structure according to claim 1, wherein the water seal plate (200) is welded or glued to the opening (111) of the lateral tube (110), and an arc-shaped bend portion (112) is formed into a forward bend at a middle part of the lateral tube (110).

5. The connection structure according to claim 1, further comprising: two position restriction indent portions (124), provided respectively on inner walls at the upper ports (121) of each tube-shaped valve seat (120), used for installing a valve body.

6. The connection structure according to claim 1, further comprising:
a plurality of horizontal reinforcing ribs (125), disposed and spaced apart from each other around an outer perimeter of each tube-shaped valve seat (120) from top to bottom of the valve seat (120); and
a plurality of longitudinal reinforcing ribs (126), disposed between the horizontal reinforcing ribs (125) and spaced apart from each other, around the outer perimeter of each tube-shaped valve seat (120).

7. A connection method of a connection structure for a plastic water channel main body of a temperature regulating faucet as claimed in claim 1, comprising the following steps:
(1) placing and fixing the H-shaped skeleton (100) on a fixture;
(2) through using welding tools or adhesive glues, connecting and fixing the water seal plate (200) to the lateral tube (110), thereby sealing the opening (111) of the lateral tube (110); and
(3) performing water leakage tests for the fixed and connected H-shaped skeleton (100) and the water seal plate (200).

8. The connection method as claimed in claim 7, wherein in the step 2, the welding tool is a hot-plate welding machine, that is used to heat an end face near the opening (111) of the lateral tube (110), to melt a surface of the end face; meanwhile, utilizing the hot-plate welding machine to heat the water seal plate (200), to melt a lower end face of the water seal plate (200); and finally putting the heated lateral tube (110) and the heated water seal plate (200) together to fix them tightly to finish welding.

9. The connection method as claimed in claim 8, wherein heat time is 6-7 seconds, welding temperature is 380°∼450°, while fixing tight duration is 6-7 seconds.

10. The connection method as claimed in claim 7, wherein in the step 2, the welding tool is a vibration-friction type welding machine, used to realize vibration welding of the lateral tube (110) and the water seal plate (200); or alternatively,
the welding tool is an ultrasonic type welding machine, used to realize ultrasonic welding of the lateral tube (110) and the water seal plate (200).

## Patentansprüche

1. Verbindungsvorrichtung für einen Kunststoffwasserkanalhauptkörper einer temperaturgeregelten Armatur, umfassend:
ein H-förmiges Gerüst (100), hergestellt aus Kunststoff, darin eingeschlossen:
ein seitliches Rohr (110) mit einer Öffnung (111), die auf einer oberen Endfläche davon bereitgestellt ist,
zwei rohrförmige Ventilsitze (120), die jeweils mit beiden Enden des seitlichen Rohrs (110) verbunden sind, wobei der innere Hohlraum jedes Ventilsitzes (120) mit dem Kanal des seitlichen Rohrs (110) verbunden und damit in Kommunikation ist, wobei jeder Ventilsitz (120) auf seinem Flansch (122) an einem oberen Anschluss (121) davon, mit einem äußeren Gewinde und an seinem unteren Ende mit einem Wassereinlassanschluss ausgestattet ist, die mit einem Wassereinlassrohr (123) mit einem äußeren Gewinde versehen ist und sich vom entsprechenden unteren Ende nach unten erstreckt;
und eine Wasserdichtplatte (200), hergestellt aus Kunststoff, um auf der Öffnung (111) des seitlichen Rohrs (110) fixiert zu sein und dadurch diese abzudichten, wobei auf der Wasserdichtplatte (200) eine Wasserauslassanschluss (210) in Kommunikation mit dem seitlichen Rohr (110) bereitgestellt ist, und wobei auf dem Wasserauslassanschluss (210) ein Wasserauslassrohr (220) bereitgestellt ist, das in Verwendung mit einer Armatur verbunden werden kann,
**gekennzeichnet durch** die Tatsache, dass sich die Öffnung (111) von einem Ende des seitlichen Rohrs (110) zum anderen Ende davon erstreckt.

2. Verbindungsvorrichtung nach Anspruch 1, wobei das äußere Gewinde um einen äußeren Umfang des Wasserauslassrohrs (220) bereitgestellt ist, um mit der Armatur gewindeverbunden zu sein.

3. Verbindungsvorrichtung nach Anspruch 1, weiter umfassend:
zwei Vorsprungsblöcke (221), die jeweils auf zwei Seiten an zwei oberen Enden des Wasserauslassrohrs (220) angeordnet sind, um an die Armatur befestigt zu werden, während ein vertikaler Vorsprungsabschnitt (222) auf einer äußeren Fläche des Vorsprungsblocks (221) bereitgestellt ist und ein eingezogener Abschnitt (223) an einem unteren Abschnitt an einer inneren Fläche des Vorsprungsblocks (221) bereitgestellt ist, um zu einem Verbindungsende der Armatur zu passen und dieses aufzunehmen.

4. Verbindungsvorrichtung nach Anspruch 1, wobei die Wasserdichtplatte (200) an die Öffnung (111) des seitlichen Rohrs (110) geschweißt oder geklebt ist und ein bogenförmiger Biegeabschnitt (112) zu einer nach vorne gerichteten Biegung an einem mittleren Teil des seitlichen Rohrs (110) gebildet ist.

5. Verbindungsvorrichtung nach Anspruch 1, weiter umfassend: zwei die Position einschränkende eingezogene Abschnitte (124), die jeweils auf inneren Wänden an den oberen Anschlüssen (121) jedes rohrförmigen Ventilsitzes (120), verwendet, um einen Ventilkörper zu installieren, bereitgestellt sind.

6. Verbindungsvorrichtung nach Anspruch 1, weiter umfassend:
eine Vielzahl von horizontalen Verstärkungsrippen (125), die um einen äußeren Umfang jedes rohrförmigen Ventilsitzes (120) von der oberen Seite zur unteren Seite des Ventilsitzes (120) angeordnet und voneinander beabstandet sind;
und eine Vielzahl von längs gerichteten Verstärkungsrippen (126), die zwischen den horizontalen Verstärkungsrippen (125) und voneinander beabstandet um den äußeren Umfang jedes rohrförmigen Ventilsitzes (120) angeordnet sind.

7. Verbindungsverfahren mit einer Verbindungsvorrichtung für einen Kunststoffwasserkanalhauptkörper einer temperaturgeregelten Armatur, nach Anspruch 1, umfassend die folgenden Schritte:
(1) Platzieren und Fixieren des H-förmigen Gerüsts (100) auf einer Fixierung
(2) durch die Verwendung von Schweißwerkzeugen oder Haftklebern, Verbinden und Fixieren der Wasserdichtplatte (200) an das seitliche Rohr (110), dadurch Abdichten auf die Öffnung (111) des seitlichen Rohrs (110); und
(3) Durchführen von Wasserlecktests für das fixierte und verbundene H-förmige Gerüst (100) und die Wasserdichtplatte (200).

8. Verbindungsverfahren nach Anspruch 7, wobei in Schritt 2 das Schweißwerkzeug ein Heißplattenschweißgerät ist, das verwendet wird, um eine Endfläche nahe der Öffnung (111) des seitlichen Rohrs (110) zu erhitzen, um eine Oberfläche der Endfläche zu schmelzen; unterdessen Verwenden des Heißplattenschweißgeräts, um die Wasserdichtplatte (200) zu erhitzen, um eine untere Endfläche der Wasserdichtplatte (200) zu schmelzen und schließlich Aneinanderstellen des erhitzten seitlichen Rohrs (110) und der erhitzten Wasserdichtplatte (200), um sie fest zu fixieren, um das Schweißen zu beenden.

9. Verbindungsverfahren nach Anspruch 8, wobei die Erhitzungszeit 6 - 7 Sekunden beträgt, die Schweißtemperatur 380° - 450° beträgt, während die Dauer der festen Fixierung 6 - 7 Sekunden beträgt.

10. Verbindungsverfahren nach Anspruch 7, wobei in Schritt 2 das Schweißwerkzeug ein Schweißgerät vom Typ Vibration-Friktion ist, das verwendet wird, um eine Vibrationsschweißung des seitlichen Rohrs (110) und der Wasserdichtplatte (200) durchzuführen; oder alternativ das Schweißwerkzeug ein Schweißgerät vom Typ Ultraschall ist, das verwendet wird, um eine Ultraschallschweißung des seitlichen Rohrs (110) und der Wasserdichtplatte (200) durchzuführen.

## Revendications

1. Structure de connexion d'un corps principal de canal d'eau en matière plastique d'un robinet de régulation de température, comprenant :
un squelette en forme de H (100), fait de matière plastique, comprenant :
un tube latéral (110), ayant une ouverture (111) prévue sur une face d'extrémité supérieure de celui-ci ;
deux sièges de soupape en forme de tube (120), reliés respectivement aux deux extrémités du tube latéral (110), avec la cavité interne de chaque siège de soupape (120) relié et en communication avec le canal du tube latéral (110), chaque siège de soupape (120) comportant, sur sa bride (122) au niveau d'un orifice supérieur (121) de celui-ci, un filetage externe et, au niveau de son extrémité inférieure, un orifice d'entrée d'eau disposé avec un tube d'entrée d'eau (123) ayant un filetage externe et s'étendant vers le bas à partir de l'extrémité inférieure respective ; et
une plaque d'étanchéité à l'eau (200), faite de matière plastique, à fixer sur l'ouverture (111) du tube latéral (110) et pour sceller de manière étanche celle-ci, et étant prévu sur la plaque d'étanchéité à l'eau (200) un orifice de sortie d'eau (210) en communication avec le tube latéral (110), et étant prévu sur l'orifice de sortie d'eau (210) un tube de sortie d'eau (220), apte à être relié en utilisation à un robinet,
**caractérisée par le fait que** l'ouverture (111) s'étend d'une extrémité du tube latéral (110) à l'autre extrémité de celui-ci.

2. Structure de connexion selon la revendication 1, dans laquelle un filetage externe est prévu autour d'un périmètre externe du tube de sortie d'eau (220), pour être relié par filetage au robinet.

3. Structure de connexion selon la revendication 1, comprenant en outre :
deux blocs en saillie (221), disposés respectivement sur deux côtés au niveau de deux extrémités supérieures du tube de sortie d'eau (220), à fixer au robinet ; tandis qu'une partie en saillie verticale (222) est prévue sur une face extérieure du bloc en saillie (221), et une partie en renfoncement (223) est prévue à une partie inférieure au niveau d'une face intérieure du bloc en saillie (221), pour correspondre à et recevoir une extrémité de connexion du robinet.

4. Structure de connexion selon la revendication 1, dans laquelle la plaque d'étanchéité à l'eau (200) est soudée ou collée à l'ouverture (111) du tube latéral (110), et une partie courbée en forme d'arc (112) est formée en une courbure vers l'avant au niveau d'une partie centrale du tube latéral (110).

5. Structure de connexion selon la revendication 1, comprenant en outre : deux parties en renfoncement de restriction de position (124), prévues respectivement sur des parois internes au niveau des orifices supérieurs (121) de chaque siège de soupape en forme de tube (120), utilisées pour installer un corps de soupape.

6. Structure de connexion selon la revendication 1, comprenant en outre :
une pluralité de nervures de renforcement horizontales (125), disposées et espacées les unes des autres autour d'un périmètre externe de chaque siège de soupape en forme de tube (120) du haut vers le bas du siège de soupape (120) ; et
une pluralité de nervures de renforcement longitudinales (126), disposées entre les nervures de renforcement horizontales (125) et espacées les unes des autres, autour du périmètre externe de chaque siège de soupape en forme de tube (120).

7. Procédé de connexion d'une structure de connexion d'un corps principal de canal d'eau en matière plastique d'un robinet de régulation de température selon la revendication 1, comprenant les étapes suivantes :
(1) placer et fixer le squelette en forme de H (100) sur un bâti ;
(2) à l'aide d'outils de soudage ou de colles adhésives, relier et fixer la plaque d'étanchéité à l'eau (200) au tube latéral (110), scellant ainsi l'ouverture (111) du tube latéral (110) ; et
(3) réaliser des tests de fuite d'eau pour le squelette en forme de H (100) et la plaque d'étanchéité à l'eau (200) fixés et reliés.

8. Procédé de connexion selon la revendication 7, dans lequel, dans l'étape 2, l'outil de soudage est une machine à souder à plaque chauffante, qui est utilisée pour chauffer une face d'extrémité près de l'ouverture (111) du tube latéral (110), pour faire fondre une surface de la face d'extrémité ; pendant ce temps, utiliser la machine à souder à plaque chauffante pour chauffer la plaque d'étanchéité à l'eau (200), pour faire fondre une face d'extrémité inférieure de la plaque d'étanchéité à l'eau (200) ; et, enfin, mettre le tube latéral chauffé (110) et la plaque d'étanchéité à l'eau chauffée (200) ensemble pour les fixer étroitement de façon à finir le soudage.

9. Procédé de connexion selon la revendication 8, dans lequel la durée de chauffage est de 6 - 7 secondes, la température de soudage est de 380° - 450°, tandis que la durée de fixation étroite est de 6 - 7 secondes.

10. Procédé de connexion selon la revendication 7, dans lequel, dans l'étape 2, l'outil de soudage est une machine à souder de type à vibration/frottement, utilisée pour réaliser un soudage par vibration du tube latéral (110) et de la plaque d'étanchéité à l'eau (200) ; ou, en variante,
l'outil de soudage est une machine à souder de type à ultrasons, utilisée pour réaliser un soudage par ultrasons du tube latéral (110) et de la plaque d'étanchéité à l'eau (200).
